# EUROPEAN PATENT SPECIFICATION

(11) **EP 4 541 703 B1**
(45) Date of publication and mention of the grant of the patent: **04.11.2026**
(21) Application number: 23203825.7
(22) Date of filing: 16.10.2023
(51) Int. Cl.: B62K 3/00, B62K 15/00, B62K 19/24, B62K 21/18

(54) **CHASSIS OF AN ELECTRIC SCOOTER**
FAHRGESTELL EINES ELEKTRISCHEN ROLLERS
CHÂSSIS D'UNE TROTTINETTE ÉLECTRIQUE

(43) Date of publication of application: 23.04.2025
(73) Proprietor: Flash Motors Ltd, 8010 Paphos (CY)
(72) Inventor: Avshalom, Shalom Shlomo Matan, 8010 Nicolaou Nikolaides & Kiniras 1 Street Paphos (CY)
(74) Representative: Lapienis, Juozas

(56) References cited:
- WO-A1-2009/126321
- WO-A1-95/21006
- DE-A1- 4 124 165
- SK-Y1- 8 228
- US-A1- 2004 145 141
- US-A1- 2014 090 916
- US-B2- 11 597 463

## Description

### TECHNICAL FIELD

The present invention refers to a chassis of an electric scooter.

### BACKGROUND ART

The world of electric scooters has been developing at a fast pace in recent years, their possible speed has increased, but their production methods and structure have been left behind. There is a real need to develop an (electric) scooter that can answer a variety of needs, and the present invention presents a very efficient electric scooter.

The document US 11 597 463 B2 discloses a chassis of an electric scooter, comprising: a chassis base comprises a right wall, a left wall, a front part, and a back part having a recess and; a chassis front comprises a central rod having a vertical hole in which a connecting cylinder is rotatably integrated, a right reinforcement rod, and a left reinforcement rod; wherein a top part of the rotatably connecting cylinder is connected to a steering rod of the electric scooter, a lower part of the rotatably connecting cylinder is connected to a front fork on which a front wheel of the electric scooter is assembled.

### DESCRIPTION OF THE DRAWINGS

The intention of the drawings attached to the application is not to limit the scope of the invention and its application. The drawings are intended only to illustrate the invention and they constitute only one of its many possible implementations.

The scope of the invention is defined by the annexed claim.
FIG. 1 depicts the electric scooter (100).
FIG. 2 depicts the chassis base (99).
FIGS 3A - 3C depict the right and the left walls.
FIGS 4A and 4B depict the front part (96) of the chassis base.
FIG. 5 depicts the back part (95) of the chassis base.
FIGS 6 and 7A depict the chassis base with the central rod (93).
FIG. 7B depicts the central rod (93).
FIGS 8 and 9 depict the chassis front (94).
FIGS 10 - 13 depict the steering rod connector (90) with the chassis front.
FIG. 14 depicts the connecting cylinder (75).
FIG. 15 depicts the central front base (84) with the chassis base.
FIG. 16 depicts the steering rod assembled on the steering rod connector.
FIG. 17 depicts the front fork (85) to which the front wheel is connected.
FIG. 18 depicts the back base (79) connected to the chassis base (99).
FIGS 19 and 20 depict the chassis base, the chassis front, and the back fork.

### THE INVENTION

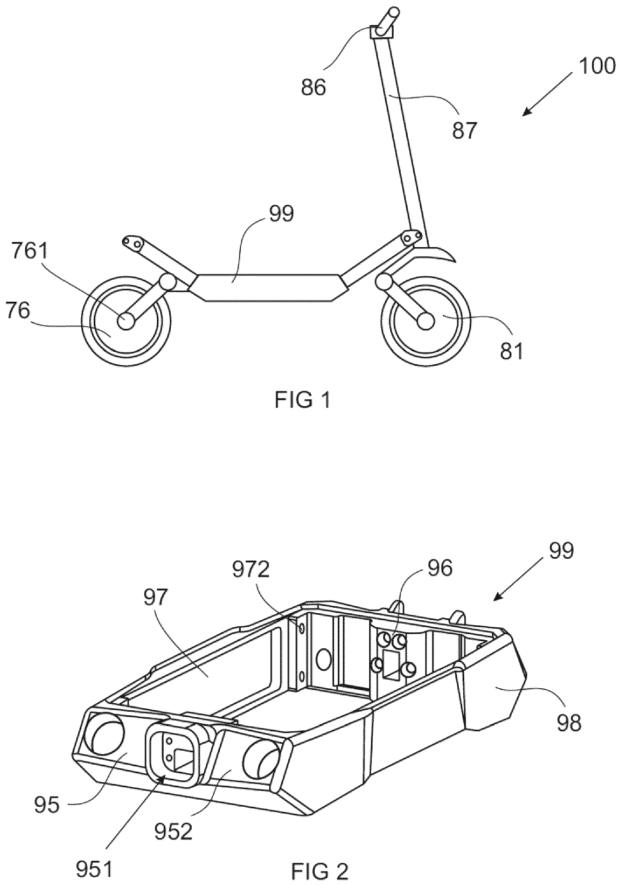

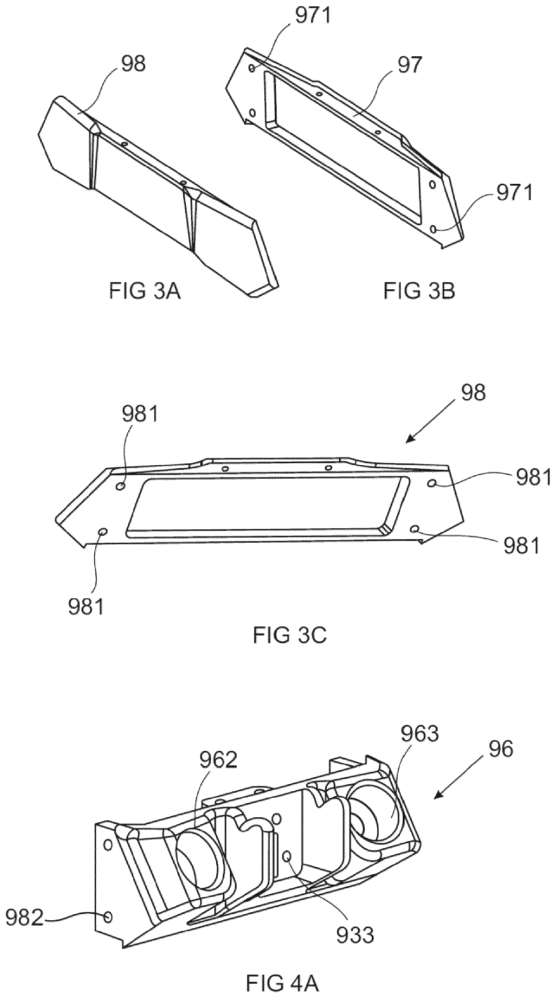

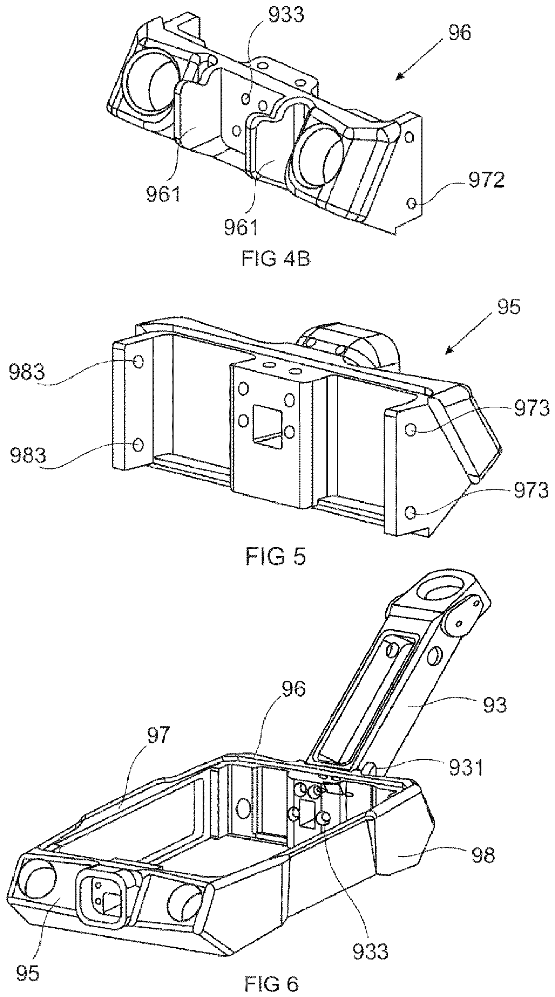

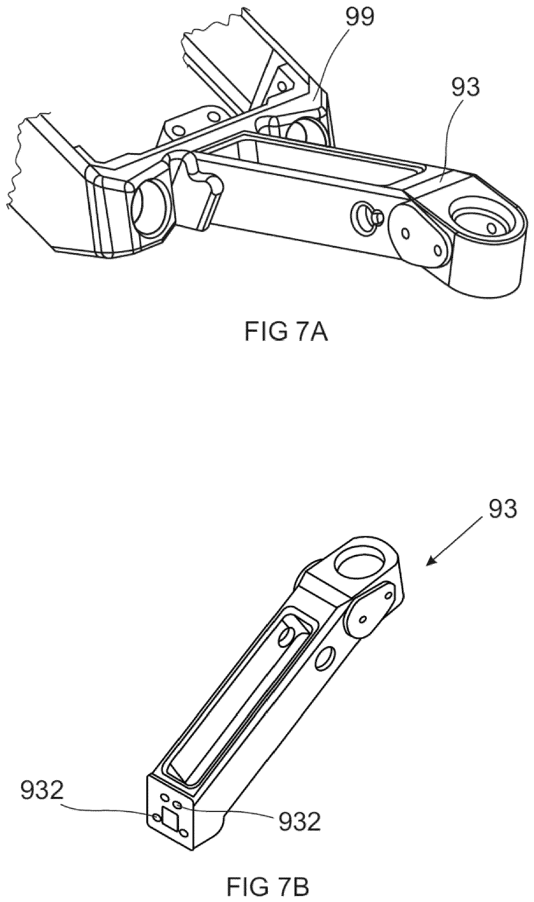

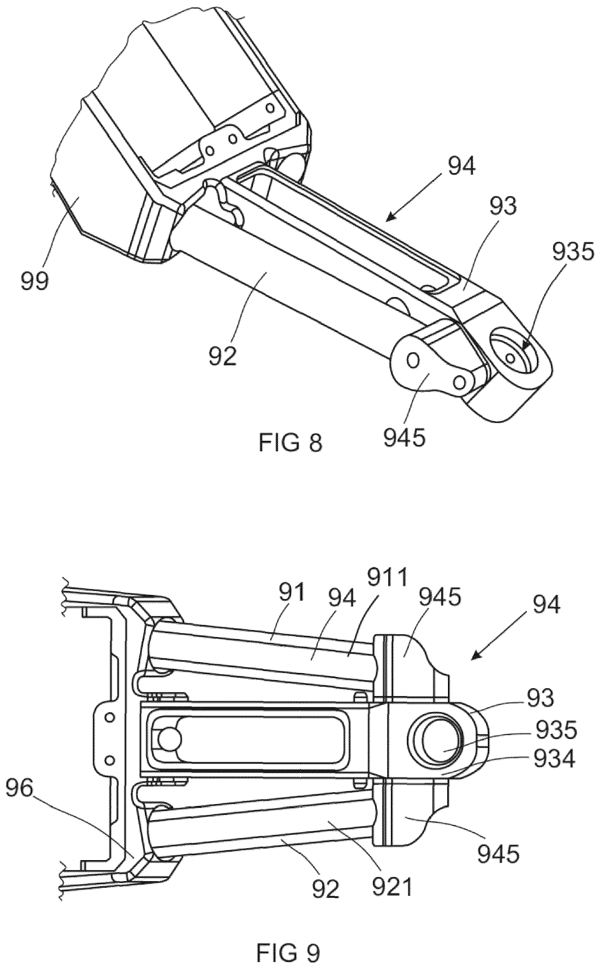

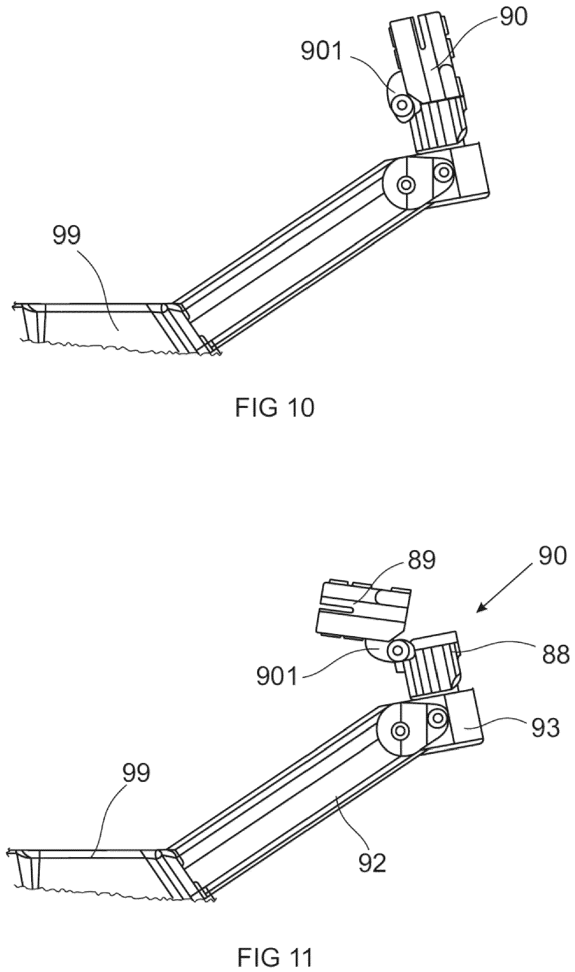

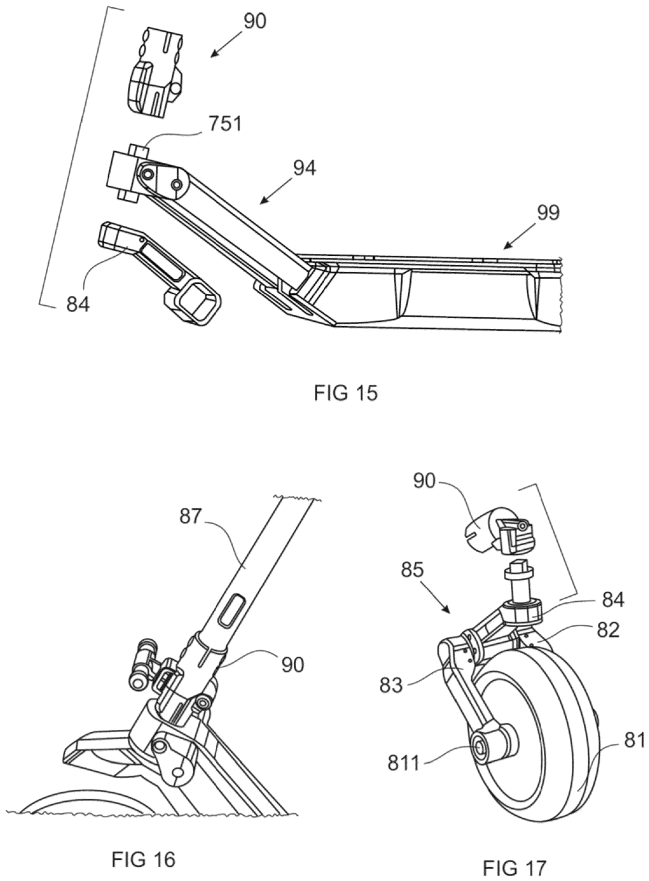

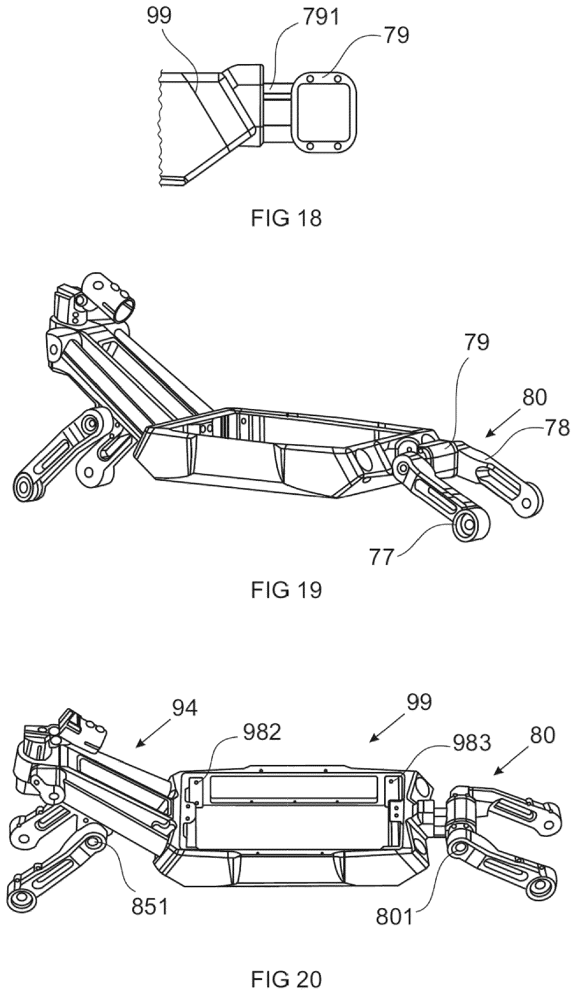

The main object of the present invention is to provide a chassis according to claim 1 of an electric scooter (100). Figure 1 depicts the electric scooter (100) that comprises the following parts:
**A chassis base (99)** comprises a right wall (98), a left wall (97), a front part (96), and a back part (95). Figure 2 depicts the chassis base (99), Figures 3A - 3C depicts the right wall (98) and the left wall (97), Figures 4A and 4B depict the front part (96) of the chassis base, and Figure 5 depicts the back part (95) of the chassis vase.
**A chassis front (94)** comprises a central rod (93), a right reinforcement rod (92), and a left reinforcement rod (91). Figures 6 and 7 depict the chassis base with the central rod (93), and Figures 8 and 9 depict the chassis front (94).
**A steering rod connector (90)** comprises an upper hollow part (89) and a lower hollow part (88). The upper hollow part is connected to the lower hollow part by means of a hinge (901) that enables the upper hollow part to be folded at ninety degrees relatively to the lower hollow part, more or less, and by that to fold the steering rod (and the handlebars) that is connected to the upper hollow part when the scooter is in storage or transport. The upper hollow part also includes a closing means consisting of a screw handle (902A) and a clamping plate (902B) that locks the upper hollow part to the lower part in a vertical position and prevents it from folding when using the scooter. Figures 10 - 13 depict the steering rod connecter (90) connected to the chassis front.
**A front fork (85)** comprises a central front base (84), a right front fork arm (83) and a left front fork arm (82) (Preferably made of carbon). Figure 15 depicts the central front base (84), Figure 16 depicts a steering trod (87) connected to the steering rod connector (90), and figure 17 depicts the front fork (85) to which the front wheel is connected.
**A back fork (80)** comprises a central back base (79), a right back fork arm (78) and a left back fork arm (77). Figure 18 depicts the central back base (79) connected to the chassis base (99) and Figures 19 and 20 depict the chassis base (99), the chassis front (94), and the back fork (80).
**A steering rod (87)** to which the handlebars (86) of the scooter are attached. **A front wheel (81)** that is connected to the front fork (85) by a pivot (811), and a **back wheel (76)** that is connected to the back fork (80) by a pivot (761).

It is preferably that the above mentioned parts of the electric scooter (100) are made of aluminum by CNC milling process (the CNC stand for a Computer Numerical Control (CNC) machining is a manufacturing process in which pre-programmed computer software dictates the movement of factory tools and machinery for making parts usually of metal) and are connected to each other by screws. Due to this special structure of the parts of the scooter and the way they are connected to each other, any damaged part can be replaced with another part without disassembling the scooter, and this can be done by the user without the need for the assistance of a professional.

**Assembling the chassis base:** The right wall is connected to the front and back parts by four screws that are screwed into four holes (981) on the right wall and four matching holes: two holes (982) on the right side of the front part and two holes (983) on the right side of the back part of the chassis base as depicted for example in Figures 2, 3A, 3B, 4 and 5. The left wall is connected to the front and back parts also by four screws that are screwed into four holes (971) on the right wall and four matching holes: two holes (972) on the left side of the front part and two holes (973) on the left side of the rear part of the chassis base as depicted for example in the Figures.

**Assembling the chassis front (94):** the central rod is connected to the chassis base by connecting the rear part (931) of the central rod to the front part of the chassis base using four screws that are screwed into four holes (932) in the rear part of the central rod that correspond to four holes (933) in the front part. The front part of the chassis base includes two ears (flat vertical plates) (961) that create a kind of recess into which the rear part of the central rod is integrated, thus fixing it and preventing it from straying to the sides.

The front part of the chassis base includes a right recess (962) and a left recess (963) into which the right and left reinforcement rods (91) (92) are integrated as depicted for example in Figures 8 and 9. It is also possible to screw a screw through the walls and through the reinforcement bars to create a stable and strong connection. The front parts (921) (911) of the right and left reinforcement rods are connected by means of adapters (945) to the front part (934) of the central rod, and by means of screws, as shown in drawings 8 - 11.

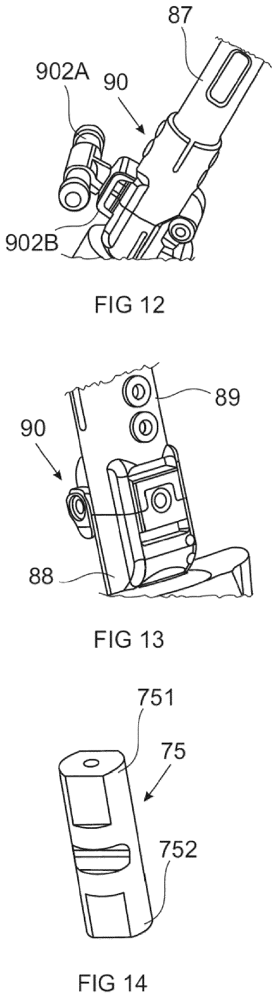

**Assembling the steering rod connector (90):** the central rod (93) includes a vertical hole (935) into which a connecting cylinder (75) is integrated. Figure 14 depicts the connecting cylinder (75). The vertical hole (935) includes an upper bearing and a lower bearing (not shown in the drawings) and the connecting cylinder is inserted and positioned inside the vertical hole and fastened (pressure clamping) to the bearings, in such a way that it can rotate, although it cannot be pulled out unless force is applied using suitable tools. The lower hollow part (88) of the steering rod connector is assembled on the top part (751) of the connecting cylinder and the steering rod (87) is assembled on the upper hollow part (89) of the steering rod connector, as depicted for example in Figures 10 - 12 and Figure 16.

**Assembling the front fork (85):** the central front base (84) is assembled on a lower part (752) of the connecting cylinder as depicted for example in Figure 15 and the right front fork arm (83) and the left front fork arm (82) are connected to the central front base by a front horizontal axis (851) and forming the front fork to which the front wheel is assembles as depicted for example in Figures 17, 19 and 20.

**Assembling the back fork (80):** The front part (791) of the central back fork base (79) is inserted into a recess (951) in the back part (952) of the rear part (95) of the chassis base, which can be screwed by screws. Then the right and left back fork arms are connected to the central back fork base by a back horizontal axis (801) and forming the back fork to which the back wheel is assembles as depicted for example in Figures 18 - 20.

The electric scooter also equipped with battery, wires, and mechanisms for driving and controlling the scooters as in standard scooters.

## Claims

1. A chassis (99, 94) of an electric scooter (100), comprising:
(a) **a chassis base (99)** comprises a right wall (98), a left wall (97), a front part (96) having two flat vertical plates (961) creating a recess, and a back part (95) having a recess (951), and;
(b) **a chassis front (94)** comprises a central rod (93) having a vertical hole (935) in which a connecting cylinder (75) is rotatably integrated, a right reinforcement rod (92), and a left reinforcement rod (91);
wherein the chassis base (99) is assembled by connecting the right wall (98) to the front and back parts (96, 95) by four screws through four holes (981) on the right wall and two matching holes (982) on the right side of the front part (96) and two matching holes (983) on the right side of the back part (95), and by connecting the left wall (97) to the front and back parts (96, 95) by four screws through four holes (971) on the left wall and two matching holes (972) on the left side of the front part (96) and two matching holes (973) on the left side of the back part (95);
wherein the chassis front (94) is connected to the chassis base (99) by connecting a rear part (931) of the central rod (93) to the recess created by the two vertical plates (961) of the front part (96) by four screws that are screwed into four holes (932) in the rear part (931) of the central rod (93) that correspond to four holes (933) in the front part, and by integrating the right and left reinforcement rods (91, 92) into right and left recesses (962, 963) in the front part (96) of the chassis base (99); the front parts (921) (911) of the right and left reinforcement rods are connected by means of adapters (945) to the front part (934) of the central rod, and by means of screws;
wherein a top part (751) of the rotatably connecting cylinder (75) is configured to be connected to a steering rod (87) of the electric scooter (100), a lower part (752) of the rotatably connecting cylinder (75) is configured to be connected to a front fork (85) on which a front wheel (81) of the electric scooter (100) is assembled, and the recess (951) of a rear part (952) of the back part (95) of the chassis base (99) is configured to be connected to a back fork (80) on which a back wheel (76) of the electric scooter (100) is assembled.

## Patentansprüche

1. Fahrgestell (99, 94) eines Elektrorollers (100), umfassend:
(a) **eine Fahrgestellbasis (99)**, die eine rechte Wand (98), eine linke Wand (97), einen vorderen Teil (96), der zwei flache vertikale Platten (961) aufweist, die eine Aussparung bilden, und einen hinteren Teil (95) mit einer Aussparung (951) umfasst, und
(b) **eine Fahrgestellfront (94)**, die eine zentrale Stange (93) mit einer vertikalen Bohrung (935), in die ein verbindender Zylinder (75) drehbar integriert ist, eine rechte Verstärkungsstange (92) und eine linke Verstärkungsstange (91) umfasst;
wobei die Fahrgestellbasis (99) durch Verbinden der rechten Wand (98) mit den vorderen und hinteren Teilen (96, 95) mittels vier Schrauben durch vier Bohrungen (981) an der rechten Wand und zwei passende Bohrungen (982) an der rechten Seite des vorderen Teils (96) und zwei passende Bohrungen (983) an der rechten Seite des hinteren Teils (95) sowie durch Verbinden der linken Wand (97) mit den vorderen und hinteren Teilen (96, 95) mittels vier Schrauben durch vier Bohrungen (971) an der linken Wand und zwei passende Bohrungen (972) an der linken Seite des vorderen Teils (96) und zwei passende Bohrungen (973) an der linken Seite des hinteren Teils (95) zusammengebaut ist;
wobei die Fahrgestellfront (94) mit der Fahrgestellbasis (99) durch Verbinden eines rückwärtigen Teils (931) der zentralen Stange (93) mit der durch die zwei vertikalen Platten (961) des vorderen Teils (96) gebildeten Aussparung mittels vier Schrauben, die in vier Bohrungen (932) im rückwärtigen Teil (931) der zentralen Stange (93) eingeschraubt werden, die vier Bohrungen (933) im vorderen Teil entsprechen, und durch Integrieren der rechten und linken Verstärkungsstangen (91, 92) in die rechten und linken Aussparungen (962, 963) im vorderen Teil (96) der Fahrgestellbasis (99) verbunden ist; die vorderen Teile (921), (911) der rechten und linken Verstärkungsstangen mittels Adapter (945) mit dem vorderen Teil (934) der zentralen Stange und mittels Schrauben verbunden sind;
wobei ein oberer Teil (751) des drehbar verbindenden Zylinders (75) dazu konfiguriert ist, mit einer Lenkstange (87) des Elektrorollers (100) verbunden zu werden, ein unterer Teil (752) des drehbar verbindenden Zylinders (75) dazu konfiguriert ist, mit einer Vordergabel (85) verbunden zu werden, an der ein Vorderrad (81) des Elektrorollers (100) montiert ist, und die Aussparung (951) eines rückwärtigen Teils (952) des hinteren Teils (95) der Fahrgestellbasis (99) dazu konfiguriert ist, mit einer Hintergabel (80) verbunden zu werden, an der ein Hinterrad (76) des Elektrorollers (100) montiert ist.

## Revendications

1. Châssis (99, 94) d'un scooter (100) électrique, comprenant :
(a) **une base (99) de châssis** qui comprend une paroi (98) droite, une paroi (97) gauche, une partie (96) avant présentant deux plaques (961) verticales planes formant un évidement et une partie (95) arrière présentant un évidement (951) et
(b) **un avant (94) de châssis** qui comprend une tige (93) centrale présentant un trou (935) vertical dans lequel un cylindre (75) de liaison est intégré de manière rotative, une tige (92) de renfort droite et une tige (91) de renfort gauche ;
dans lequel la base (99) du châssis est assemblée en reliant la paroi (98) droite aux parties (96, 95) avant et arrière au moyen de quatre vis traversant quatre trous (981) sur la paroi droite et deux trous (982) correspondants sur le côté droit de la partie (96) avant et deux trous (983) correspondants sur le côté droit de la partie (95) arrière et en reliant la paroi (97) gauche aux parties (96, 95) avant et arrière au moyen de quatre vis traversant quatre trous (971) sur la paroi gauche et deux trous (972) correspondants sur le côté gauche de la partie (96) avant et deux trous (973) correspondants sur le côté gauche de la partie (95) arrière ;
dans lequel l'avant (94) du châssis est relié à la base (99) du châssis en reliant une partie (931) postérieure de la tige (93) centrale à l'évidement formé par les deux plaques (961) verticales de la partie (96) avant au moyen de quatre vis vissées dans quatre trous (932) dans la partie (931) postérieure de la tige (93) centrale qui correspondent à quatre trous (933) dans la partie avant et en intégrant les tiges (91, 92) de renfort droite et gauche dans des évidements (962, 963) droit et gauche dans la partie (96) avant de la base (99) du châssis ; les parties (921), (911) avant des tiges de renfort droite et gauche sont reliées au moyen d'adaptateurs (945) à la partie (934) avant de la tige centrale et au moyen de vis ;
dans lequel une partie (751) supérieure du cylindre (75) de liaison rotative est configurée pour être reliée à une tige (87) de direction du scooter (100) électrique, une partie (752) inférieure du cylindre (75) de liaison rotative est configurée pour être reliée à une fourche (85) avant sur laquelle une roue (81) avant du scooter (100) électrique est montée, et l'évidement (951) d'une partie (952) postérieure de la partie (95) arrière de la base (99) du châssis est configuré pour être relié à une fourche (80) arrière sur laquelle une roue (76) arrière du scooter (100) électrique est montée.
